# EUROPÄISCHE PATENTSCHRIFT

(11) **EP 2 586 314 B1**
(45) Veröffentlichungstag und Bekanntmachung des Hinweises auf die Patenterteilung: **18.01.2017**
(21) Anmeldenummer: 11186508.5
(22) Anmeldetag: 25.10.2011
(51) Int. Cl.: A22C 11/08, A22C 11/02

(54) **Nahrungsmittelmaschine, insbesondere Maschine zum Verarbeiten und Herstellen von Wurst sowie Verfahren zu deren Betrieb**
Food machine, in particular machine for processing and producing sausage and method for operating same
Machine pour produits alimentaires, notamment machine destinée à traiter et fabriquer des saucisses ainsi que son procédé de fonctionnement

(43) Veröffentlichungstag der Anmeldung: 01.05.2013
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- EP-A1- 2 230 063
- EP-A2- 2 384 635
- EP-A2- 2 384 635
- "European Norm EN 12463:2004 for Food manufacturing equipment, Filling machines (food), Meat, Equipment safety, Safety measures, Hazards, Occupational safety, Hygiene, Verification", EUROPEAN NORM EN 12463:2004,, Nr. European Norm EN 12463:2004, 1. Januar 2011 (2011-01-01), Seiten 26-32, XP008150251,
- "European Norm EN 12463:2004 for Food manufacturing equipment, Filling machines (food), Meat, Equipment safety, Safety measures, Hazards, Occupational safety, Hygiene, Verification", EUROPEAN NORM EN 12463:2004,, no. European Norm EN 12463:2004, 1 January 2011 (2011-01-01), pages 26-32, XP008150251,

## Beschreibung

Die Erfindung betrifft eine Nahrungsmittelmaschine, insbesondere eine Maschine zum Verarbeiten und Herstellen von Wurst mit einem Auftritt sowie ein entsprechendes Verfahren.

Die European Norm EN 12463:2004, 01. Januar 2011, Seiten 26-32 beschreibt bereits, dass dann, wenn Auftritte bzw. Leitern aufgeklappt werden, automatisch eine Verriegelung aktiviert wird. Nur über eine Zweihandschaltung am Einfülltrichterrand kann die Verriegelung aufgehoben werden.

Die EP 2 230 063 A1 beschreibt eine Kunststoff-Spritzgießmaschine mit einer Bodenbasis und einer darauf gelagerten begehbaren Bodenplatte, wobei Gewichtssensoren vorgesehen sind zur Erfassung eines auf der Bodenplatte wirkenden Gewichts. Bei Erfassen eines entsprechenden Gewichts kann verhindert werden, dass sich bewegliche Aufspannplatten bewegen und einen Bediener gefährden. Der Trittschutz befindet sich am Boden in einem Maschinenbett.

In der Nahrungsmittelindustrie werden an die Produktionseinrichtungen und Maschinen zu Überwachungs- und Kontrollzwecken entsprechende Auftritte angebaut bzw. in die Produktionsmaschinen integriert. Maschine und Auftritt müssen dabei so aufeinander abgestimmt sein, dass die jeweils geltenden Sicherheits- und Ergonomievorschriften eingehalten werden. Der Auftritt ist dabei Teil des Sicherheitskonzepts der Maschine und fest mit dieser verbunden.

Häufig wird der Auftritt derart ausgeführt, dass er von einer kompakten Ruheposition (z.B. eingeklappter Zustand) in eine ausladende Arbeitsposition (ausgeklappter Zustand) verbracht werden kann, z.B. durch manuelles Ausklappen des Auftritts. Der Auftritt ist dabei sicherheitstechnisch gekoppelt ausgeführt. Das bedeutet, dass die Maschine bei hochgeklapptem Auftritt freigeschaltet ist, in abgeklappter Auftrittsposition ist die Maschine jedoch stillgesetzt. Nach dem Hochklappen des Auftritts muss dies zunächst an der Eingabeeinheit bestätigt werden, damit die Maschine dann wieder uneingeschränkt betrieben werden kann.

Lose, d.h. frei in der Produktionsstätte bewegliche Auftritte, z.B. in Form von Podesten, Leitern, Stufen etc. sind aus Sicherheitsgründen nicht akzeptabel. Diese beweglichen Auftritte können nämlich einfach und ohne Werkzeug, z.B. vom Bedienpersonal, in unmittelbarer Nähe von Gefahrenquellen verbracht werden. Da diese Auftritte nicht mit dem Maschinensicherheitskonzept gekoppelt sind läuft die Maschine auch bei Betreten des beweglichen Auftritts, selbst wenn dieser gefährlich nah an einer Gefahrenstelle verbracht wurde. Somit kann die Einhaltung der erforderlichen Sicherheitsmaße (Abstand bis zur Gefahrenquelle) nicht zuverlässig gewährleistet werden. Dies stellt ein hohes Gefährdungspotenzial z.B. für den Bediener bzw. das Reinigungspersonal dar.

Dadurch, dass ein gekoppelter Auftritt Teil des Maschinensicherheitskonzepts ist und die Maschine nur bei hochgeklapptem Auftritt betriebsbereit ist, muss der Auftritt je nach Anwendung, täglich mehr oder weniger häufig von Hand in die verschiedenen Positionen verbracht werden. Da das Bedienpersonal häufig schwer beladen ist und somit keine Hand frei hat, ist es besonders nachteilig, dass der Auftritt von Hand betätigt werden muss.

Hiervon ausgehend liegt der vorliegenden Erfindung die Aufgabe zugrunde, eine Vorrichtung und ein Verfahren bereitzustellen, die den Arbeitsablauf vereinfachen, wobei das ständige

Hoch- und Herunterklappen eines Auftritts entfällt und gleichzeitig die Sicherheit der Maschine nicht beeinträchtigt wird.

Erfindungsgemäß wird diese Aufgabe durch die Merkmale der Ansprüche 1 und 10 gelöst.

Erfindungsgemäß weist die Nahrungsmittelmaschine einen mit der Maschine gekoppelten Auftritt auf, auf den sich eine Person zu Bedien- und Überwachungszwecken stellen kann. Insbesondere sieht die Nahrungsmittelmaschine eine Sicherheitseinrichtung vor, die erfasst, ob eine Person auf dem Auftritt steht, und zwar dann, wenn sich der Auftritt in einer ausladenden Auftrittsposition befindet. Unter ausladender Auftrittsposition versteht man eine Position des Auftritts, in der der Auftritt derart über ein Maschinengestell oder -gehäuse vorsteht, dass eine Person sich auf den Auftritt stellen kann oder aber das Gehäuse oder Gestell der Maschine eine entsprechende Aussparung aufweist derart, dass eine Person sich auf den Auftritt stellen kann. Wenn erfasst wird, dass eine Person auf dem Auftritt steht, können die Funktionen der Nahrungsmittelmaschine zumindest teilweise gesperrt werden. Dadurch, dass erfasst werden kann, wenn sich eine Person auf dem Auftritt befindet, ist es nicht notwendig, dass ein Auftritt in eine Ruheposition (z.B. eingeklappten Zustand) gebracht werden muss, bevor die Nahrungsmittelmaschine wieder in vollem Umfang betrieben werden kann. Es ist somit auch möglich, die Maschine freizuschalten, wenn der Auftritt in einer Auftritts- bzw. Arbeitsposition angeordnet ist und von der Sichherheitseinrichtung erfasst wird, dass sich keine Person auf dem Auftritt befindet. Somit entfällt das ständige Hoch- und Herunterklappen oder Einfahren des Auftritts.

Vorteilhafterweise umfasst die Nahrungsmittelmaschine eine Steuereinrichtung, die in Abhängigkeit eines von der Sicherheitseinrichtung erzeugten Signals die Funktionen der Nahrungsmittelmaschine zumindest teilweise sperrt oder freischaltet. Das heißt, dass wenn erfasst wird, dass sich der Auftritt in einem belasteten Zustand befindet, die Funktionen der Nahrungsmittelmaschine zumindest teilweise gesperrt werden, insbesondere zumindest die aktiven Bewegungen, wie beispielsweise die Bewegung des Förderwerks bei einer Wurstmaschine. Sobald erfasst wird, dass keine Person mehr auf dem Auftritt steht, kann die Maschine vom Bediener wieder freigeschaltet werden und in vollem Umfang genutzt werden.

Gemäß einer bevorzugten Ausführungsform umfasst die Sicherheitseinrichtung dazu mindestens eine Messeinrichtung. Die Vorrichtung kann beispielsweise eine Messeinrichtung zum Erfassen der Auftrittsbelastung aufweisen, d.h. z.B. eine Einrichtung zum Erfassen der auf die Auftrittsfläche wirkende Kraft (z.B. Druckmessdose, Schaltmatte, Dehnungsmessstreifen etc.). Es kann auch eine Messeinrichtung verwendet werden zum Erfassen einer durch die Auftrittsbelastung veränderten Position des Auftritts, insbesondere ein Winkelsensor zum Messen des Winkels ϕ zwischen dem Auftritt und einer Bezugsebene oder ein oder mehrere Positionssensoren- oder schalter. Alternativ zu den Messeinrichtungen, die ein Signal aufgrund der Auftrittsbelastung bzw. der Kraft, die auf den Auftritt wirkt, liefern, kann auch eine optische Messeinrichtung zum Erfassen einer Person auf dem Auftritt verwendet werden, insbesondere ein optischer Sensor oder eine Kamera.

Vorteilhafterweise weist die Sicherheitseinrichtung eine Auswerteeinheit auf, die ein Messsignal von einer Messeinrichtung empfängt und in Abhängigkeit des Signals ermittelt, ob eine Person auf dem Auftritt steht. Diese Messeinrichtung kann in der Steuereinrichtung integriert sein.

Gemäß einer bevorzugten Ausführungsform umfasst die Auswerteeinheit eine Vergleichseinrichtung, zum Vergleichen des Messsignals der Messeinrichtung mit einem Vergleichswert. Somit können beispielsweise Fehler ausgeblendet werden. Bei einer Belastung von beispielsweise < 10 kg bestimmt dann die Auswerteeinheit, dass sich keine Person auf dem Auftritt befindet.

Die vorliegende Erfindung ermöglicht Ausführungsformen, bei denen der Auftritt stets in einer ausladenden Auftrittsposition verbleiben kann. Es ist aber auch vorteilhaft, wenn der Auftritt auch in eine nicht ausladende Ruheposition gebracht werden kann, damit, wenn er nicht benötigt wird, nicht störend von der Maschine hervorsteht. Der Auftritt kann also von einer nicht ausladenden Ruheposition in die ausladende Arbeitsposition mit einem entsprechenden Antrieb durch die Betätigung eines Schalters gebracht werden. Besonders vorteilhaft ist es, wenn ein Fußschalter vorgesehen ist. Somit kann das Bedienpersonal den Auftritt auch dann bewegen, wenn es keine Hände frei hat. Vorteilhafterweise ist die Sicherheitseinrichtung dann so ausgebildet, dass sie mit einer entsprechenden Messeinrichtung erfassen kann, ob sich der Auftritt in einer nicht ausladenden Ruheposition befindet. Auch dann können die Funktionen der Nahrungsmittelmaschine freigeschaltet werden.

Vorteilhafterweise ist der Auftritt derart angeordnet, dass er in einer ausladenden Arbeitsposition bei Belastung seine Stellung ändert und bei Entlastung automatisch in den unbelasteten Zustand zurückkehrt, wobei eine Messeinrichtung der Sicherheitseinrichtung dann die Stellung des Auftritts detektieren kann.

Gemäß der Erfindung kann beispielsweise ermittelt werden, ob sich der Auftritt a) in einer nichtausladenden Ruheposition oder b) in einer ausladenden Arbeitsposition ohne Belastung durch eine Person oder c) in einer ausladenden Arbeitsposition mit Belastung durch die Person befindet. Im Fall c) werden die Funktionen der Nahrungsmittelmaschine (1) zumindest teilweise gesperrt und im Fall a) oder b) werden die Funktionen der Nahrungsmittelmaschine freigeschaltet.

Die Sicherheitseinrichtung (7,8) kann über einen Positionsschalter die durch die Auftrittsbelastung einer Person veränderte Position erfassen, wobei durch den Positionsschalter der Ansteuerstrom oder Versorgungsstrom für mindestens eine Funktion der Nahrungsmittelmaschine unterbrochen wird.

Die vorliegende Erfindung wird nachfolgend unter Bezugnahme der folgenden Figuren näher erläutert.
- Fig. 1: zeigt eine Ausführungsform einer Nahrungsmittelmaschine gemäß der vorliegenden Erfindung in schematischer Darstellung, bei der sich der Auftritt in einer nicht ausladenden Ruheposition befindet.
- Fig. 2: zeigt die in Fig. 1 gezeigte Nahrungsmittelmaschine, bei der sich der Auftritt in einer ausladenden Auftrittsposition ohne Belastung durch eine Position befindet.
- Fig. 3: zeigt die in den Fig. 1 und 2 gezeigte Nahrungsmittelmaschine, bei der sich der Auftritt in einer ausladenden Auftrittsposition mit Belastung durch eine Person befindet.
- Fig. 4: zeigt grob schematisch die Sicherheitseinrichtung sowie die Steuereinrichtung.
- Fig. 5: zeigt grob schematisch einen Ablaufplan eines möglichen Ausführungsbeispiels des erfindungsgemäßen Verfahrens.

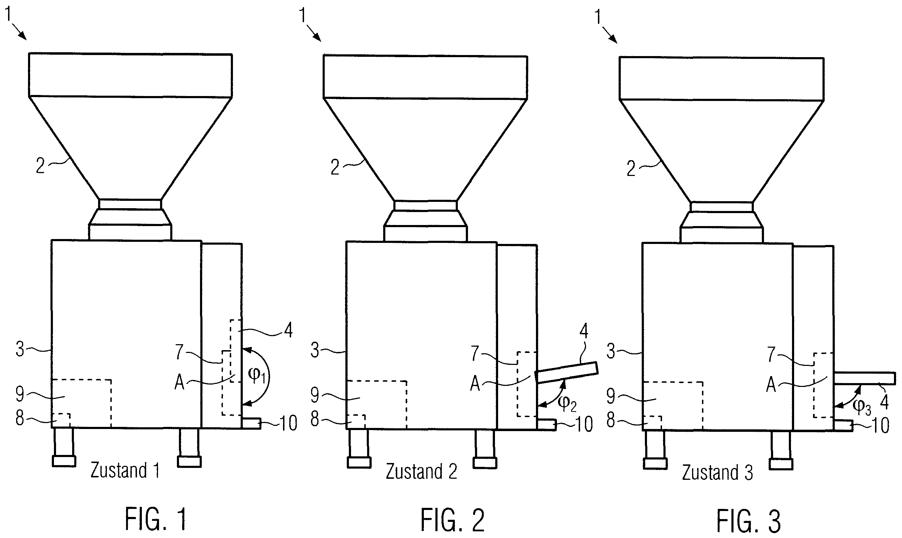

Fig. 1 zeigt grob schematisch eine Nahrungsmittelmaschine gemäß einem Ausführungsbeispiel der vorliegenden Erfindung. In diesem Fall handelt es sich um eine Maschine zum Verarbeiten und Herstellen von Wurst, hier insbesondere einer Füllmaschine. Das Ausführungsbeispiel ist aber nicht auf eine Füllmaschine beschränkt. Die Füllmaschine weist hier einen Trichter 2 sowie ein Maschinengehäuse 3 auf. In einem unteren Bereich der Nahrungsmittelmaschine 1 ist ein Auftritt 4 vorgesehen, der an der Nahrungsmittelmaschine 1 befestigt ist und sich in Fig. 1 in einem ersten Zustand, d.h. in einer eingeklappten Ruheposition befindet. Dazu kann der Auftritt 4 beispielsweise um eine Achse A verschwenkbar gelagert sein. Fig. 2 entspricht der in Fig. 1 dargestellten Ausführungsform, wobei hier jedoch der Auftritt 4 in einem zweiten Zustand angeordnet ist, in dem er sich in einer ausladenden Auftrittsposition befindet. Während beispielsweise der Winkel ϕ1 im eingeklappten Zustand zwischen Auftrittsunterfläche und einer Bezugsebene, die beispielsweise die vertikalen Gehäusefläche umfasst ≥ 170° ist, liegt der Winkel ϕ2 im aufgeklappten Zustand z. B. in einem Bereich zwischen 92 und 95 Grad.

Fig. 3 zeigt die in Fig. 2 gezeigte Anlage, wobei sich hier der Auftritt in einem dritten Zustand befindet, nämlich in einer ausladenden Auftrittsposition mit Belastung durch eine Person. Wie nachfolgend noch näher erläutert wird, kann dabei ϕ3 entweder ϕ2 entsprechen oder entsprechend einem bevorzugten Ausführungsbeispiel, wie im Zusammenhang mit Fig. 3 erläutert, kleiner sein als ϕ2. Bei diesem bevorzugten Ausführungsbeispiel ist der Auftritt 4 insbesondere durch eine nicht dargestellte, entgegenwirkende Feder in den Zustand 2 vorgespannt. Bei einer Auftrittsbelastung verkleinert sich daher der Winkel ϕ2. Der Auftritt 4 kann beispielsweise über einen Schalter, vorteilhafterweise über den Fußschalter 10, von der in Fig. 1 gezeigten Ruheposition in die ausladende Auftrittsposition, wie in Fig. 2 dargestellt ist, gebracht werden. Durch den Schalter 10 und einen entsprechenden Antrieb (wie z.B. Gasfeder bzw. elektrischer oder pneumatischer Antrieb, mechanischer Antrieb mit Gegengewicht etc.) kann also der Auftritt 4 vom Zustand 1, d.h. der Ruheposition, in den Zustand 2, d.h. der Auftrittsposition, gebracht werden und umgekehrt.

Die vorliegende Erfindung ist jedoch nicht auf einen schwenkbaren Auftritt 4 beschränkt. Ebenso könnte der Auftritt 4, wenn auch nicht dargestellt, aus einer ausladenden Auftrittsposition über einen entsprechenden Schalter 10, insbesondere Fußschalter 10 und einen Antrieb in das Innere des Gehäuses 3 oder des Gestells verfahren werden und von dieser Ruheposition wieder nach außen in die Auftrittsposition ebenfalls durch Betätigung des Schalters 10.

Da von den sich aktiv bewegenden Teilen der Nahrungsmittelmaschinen ein gewisses Gefahrenpotenzial ausgeht, muss sichergestellt werden, dass in dem Zustand 3, in dem eine Bedienperson auf dem Auftritt 4 steht, entsprechende Funktionen nicht von der Nahrungsmittelmaschine ausgeführt werden. Bei einer Wurstmaschine sind entsprechende aktive Bewegungen mit Gefährdungspotenzial, beispielsweise die Bewegung des Förderwerks im Trichter oder die der Zubringerkurve, eines Rührers, etc.

Aus diesem Grund ist gemäß der vorliegenden Erfindung eine Sicherheitseinrichtung 7, 8 vorgesehen zum Erfassen, ob eine Person auf dem Auftritt 4 steht, wenn sich der Auftritt 4 in einer ausladenden Auftrittsposition, d.h. im Zustand 3, befindet. Wenn erfasst wird, dass sich eine Person auf dem Auftritt 4 befindet, können nämlich dann die gefährdenden Funktionen der Nahrungsmittelmaschine 1 zumindest teilweise gesperrt werden.

Die Sicherheitseinrichtung 7, 8 umfasst dazu vorzugsweise eine Messeinrichtung 7. Vorteilhafterweise ist eine Messeinrichtung zum Erfassen der Auftrittsbelastung vorgesehen. Die Messeinrichtung 7 zum Erfassen der Auftrittsbelastung kann entweder eine Messeinrichtung sein zum Erfassen einer durch die Auftrittsbelastung veränderten Position des Auftritts oder zum Erfassen einer auf den Auftritt wirkenden Kraft.

Wie aus den Fig. 2 und 3 hervorgeht, ändert sich bei Belastung des Auftritts 4 die Stellung des Auftritts, derart, dass der Winkel ϕ3 < ϕ2 ist. Durch die Vorspannung des Auftritts 4 kehrt bei Entlastung der Auftritt automatisch in den unbelasteten Zustand 2 zurück. Die Messeinrichtung 7 kann hier die Stellung des Auftritts 4 detektieren. Dies kann entweder erfolgen, indem der Winkel ϕ gemessen wird, beispielsweise über einen Winkelsensor. Über den Winkelsensor kann beispielsweise auch der Winkel ϕ1 bestimmt werden, so dass auch der Zustand 1 über diese Messeinrichtung erfasst werden kann.

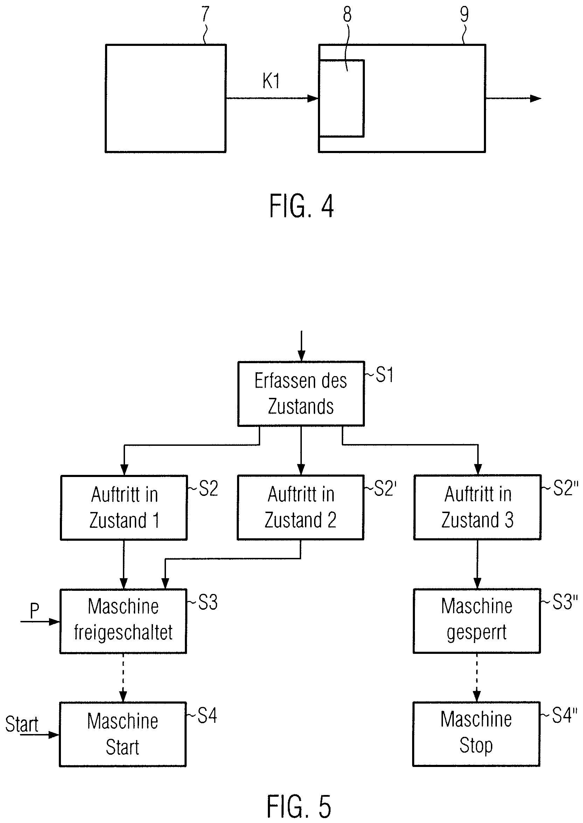

Wie insbesondere auch aus Fig. 4 hervorgeht, sendet die Messeinrichtung 7 ein Signal K1 an eine Auswerteeinrichtung 8, die beispielsweise den Messwert K1 mit einem Vergleichswert vergleicht und dann bestimmt, ob sich der Auftritt 4 im Zustand 2 oder 3 befindet. Besonders bevorzugt kann die Auswerteeinrichtung 8 auch bestimmen, ob sich der Auftritt 4 im Zustand 1, d.h. im Ruhezustand, befindet. Die Auswerteeinheit 8 erzeugt dann ein entsprechendes Signal wobei in Abhängigkeit des Signals die Funktionen der Nahrungsmittelmaschine 1 zumindest teilweise gesperrt oder freigeschaltet werden. Die Auswerteeinheit kann in der Steuerung integriert sein.

Alternativ zu dem Winkelmesser können auch ein oder mehrere Positionssensoren oder Schalter vorgesehen sein. Beispielsweise kann ein Positionsschalter in einem Bereich angeordnet sein, der einer Winkelstellung des Auftritts 4 entspricht, die sich ergibt wenn eine bestimmte Kraft auf den Auftritt 4 wirkt, die größer als ein vorbestimmter Vergleichswert ist (beispielsweise > 10 kg). Steht dann eine Person auf dem Auftritt 4, bewegt sich der Auftritt 4 nach unten, derart, dass der Schalter betätigt wird, so dass ein entsprechendes Signal von der Messeinrichtung 7 an die Auswerteeinrichtung 8, wie in Fig. 4 dargestellt ist, geleitet wird. Ein weiterer Positionsschalter kann beispielsweise in einem Bereich angeordnet sein, in dem sich der Auftritt 4 im Zustand 2 befindet. Auch hier wird dann ein entsprechendes Signal zu einer Auswerteeinheit 8 geleitet. Schließlich kann auch noch ein Positionssensor bzw. -schalter in einem Bereich angeordnet sein, in dem er anspricht oder geschaltet wird, wenn sich der Auftritt 4 in einer Ruheposition befindet. In der Auswerteeinheit kann dann beispielsweise festgestellt werden, welcher Positionssensor bzw. -schalter anspricht und in welchem Zustand sich der Auftritt 4 befindet. Die Steuereinrichtung 9 kann dann in Abhängigkeit der detektierten Position die Funktionen der Nahrungsmittelmaschine zumindest teilweise sperren oder freischalten. Im einfachsten Fall umfasst die Auswerteeinheit einen Vergleicher oder ein logisches Gatter oder einen Schalter.

Wie zuvor bereits angemerkt, kann die Messeinrichtung jedoch auch so ausgebildet sein, dass sie nicht die durch die Auftrittsbelastung veränderte Position des Auftritts detektiert sondern die Kraft, die auf die Auftrittsfläche 4 wirkt, über ein entsprechendes Signal ermittelt. Dazu kann beispielsweise eine Druckmessdose, eine Schaltmatte oder Dehnungsmessstreifen auf oder in dem Auftritt 4 vorgesehen sein. Auch hier sendet die Messeinrichtung 7 das Messsignal K1 an eine Auswerteeinrichtung 8. Die Messeinrichtung 7 weist hier beispielsweise eine Vergleichseinrichtung auf, die den Messwert K1 mit einem Vergleichswert vergleicht. Ist der Messwert K1 größer als ein Vergleichswert, z.B. 10 kg, so wird bestimmt, dass sich eine Person auf dem Auftritt befindet. Ist der Messwert K1 kleiner als der Vergleichswert, so wird angenommen, dass sich keine Person auf dem Auftritt befindet. Somit kann die Genauigkeit der Sicherheitseinrichtung noch weiter verbessert werden.

Gemäß einem weiteren Ausführungsbeispiel kann als Messeinrichtung 7 eine optische Messeinrichtung vorgesehen sein. Diese Messeinrichtung kann beispielsweise mindestens einen optischen Sensor umfassen, der in einem Bereich angeordnet ist, in dem die Person steht, und der detektiert, ob eine Person auf dem Auftritt 4 steht. Der Sensor kann beispielsweise in Form einer Lichtschranke ausgebildet sein, wobei bei Durchbrechen der Lichtschranke durch eine Person 6 die Messeinrichtung 7 ein entsprechendes Signal K1 erzeugt, das z.B. an die Auswerteeinheit 8 bzw. Steuereinrichtung 9 (siehe Fig. 4) geleitet werden kann. Der Sensor kann auch beispielsweise in Form eines Laserscanners ausgebildet sein.

Als optische Messeinrichtung kann auch eine Kamera, beispielsweise CCD-Kamera, vorgesehen sein, die entsprechende Signale K1 an eine Auswerteeinheit 8 schickt, die die Signale mit Vergleichswerten vergleicht, um zu erkennen, ob sich eine Person auf dem Auftritt 4 befindet. wobei dann die Steuereinrichtung 9 die Funktionen entsprechend steuert.

Bei den zuvor beschriebenen Ausführungsbeispielen wird ein von der Messeinrichtung erzeugtes Signal über eine Auswerteeinheit 8 von der Steuereinrichtung verwendet, um dann die Funktionen der Nahrungsmittelmaschine zumindest teilweise zu sperren oder freizuschalten. Es ist jedoch auch möglich, dass die Sicherheitseinrichtung 7, 8 über einen Positionsschalter die durch die Auftrittsbelastung einer Person 6 veränderte Position des Auftritts 4, wie in Fig. 3 dargestellt ist, erfasst, wobei über diesen Schalter gleichzeitig der Ansteuerstrom oder Versorgungsstrom für mindestens eine Funktion der Nahrungsmittelmaschine unterbrochen wird.

In diesem Fall ist die Sicherheitseinrichtung also als Hardware-Interlock ausgebildet und geht nicht über die Steuereinrichtung. Verlässt die Person 6 den Auftritt dann wieder, so nimmt der Auftritt 4, wie im Zusammenhang mit dem vorherigen Ausführungsbeispiel näher erläutert wurde, wieder automatisch eine Position im Zustand 2 ein.

Das erfindungsgemäße Verfahren wird im Zusammenhang mit Fig. 5 näher erläutert.

Zunächst wird der Zustand des Auftritts 4 erfasst (Schritt S1). Insbesondere wird über eine Messeinrichtung 7 erfasst, ob sich der Auftritt 4 im Zustand 1 (S2), d.h. der Ruheposition, befindet oder aber ob der Auftritt 4 im Zustand 2 (S2') angeordnet ist, d.h. der unbelasteten Auftrittsposition oder aber im Zustand 3 (S2"), d.h. in der durch eine Person 6 belasteten Auftrittsposition. Wird über eine Messeinrichtung 7 erfasst, dass sich der Auftritt im Zustand 1 befindet, so werden die Funktionen der Nahrungsmittelmaschine 1 freigeschaltet (S3). Der Ausdruck Freischalten bezieht sich hier nur auf dieses Sicherheitssystem, d.h. Ausschließen einer Gefährdung einer Person, die auf einem Auftritt steht durch bewegliche Teile. Sollte die Maschine noch weitere Sicherheitssysteme aufweisen, so muss auch noch mindestens ein weiteres Freigabesignal P erzeugt werden, dass die Funktionen tatsächlich alle freigeschaltet werden. Das bedeutet, dass in diesem Zustand eine bereits laufende Nahrungsmittelmaschine uneingeschränkt weiterlaufen kann oder aber bei einem Startbefehl die Maschine starten kann (S4).

Wird erfasst, dass sich der Auftritt im Zustand 2, d.h. im unbelasteten Auftrittszustand (S2') befindet, so wird die Maschine ebenso, wie im Zusammenhang mit Zustand 1 beschrieben, freigeschaltet.

Wird jedoch ein belasteter Zustand 3 (S2") erfasst, so wird in einem Schritt S3" die Maschine zumindest teilweise gesperrt derart, dass zumindest aktive Bewegungen der Maschine 1 gesperrt werden. Das bedeutet, dass bei laufender Maschine entsprechende Funktionen gestoppt werden (S4") oder aber entsprechende Funktionen nicht gestartet werden können.

Befindet sich der Auftritt 4 in der durch eine Person belasteten Auftrittsstellung und verlässt die Person den Auftritt 4 wieder, so wird über die Sicherheitseinrichtung 7, 8 erfasst, dass der Auftritt aus dem Zustand 3 wieder in den Zustand 2 übergegangen ist. Das Sicherheitssystem kann so verschaltet sein, dass dann beim Übergang vom Zustand 3 in den Zustand 2 eine zusätzliche Freischalteingabe (siehe z.B. P) notwendig ist, damit die entsprechenden Funktionen wieder in Betrieb genommen werden können. Das erfindungemäße Verfahren wird kontinuierlich durchgeführt sobald die Maschine eingeschaltet wird. Somit ist ein sicherer Betrieb gewährleistet.

## Patentansprüche

1. Nahrungsmittelmaschine (1), insbesondere Maschine zum Verarbeiten und Herstellen von Wurst mit einem Auftritt (4), **gekennzeichnet durch**
eine Sicherheitseinrichtung (7, 8) zum Erfassen, ob eine Person auf dem Auftritt (4) steht, wenn sich der Auftritt (4) in einer ausladenden Auftrittsposition befindet,
wobei ermittelt werden kann, ob sich der Auftritt (4) in einer
- a) nicht ausladenden Ruheposition, oder
- b) in einer ausladenden Arbeitsposition ohne Belastung **durch** eine Person oder
- c) in einer ausladenden Arbeitsposition mit Belastung **durch** eine Person befindet und im Fall c) die Funktionen der Nahrungsmittelmaschine (1) zumindest teilweise gesperrt werden und im Fall a) oder b) die Funktionen der Nahrungsmittelmaschine freigeschaltet werden können.

2. Nahrungsmittelmaschine (1) nach Anspruch 1, **dadurch gekennzeichnet, dass** die Nahrungsmittelmaschine derart aufgebaut ist, dass in Abhängigkeit eines von der Sicherheitseinrichtung (7, 8) erzeugten Signals (K1), die Funktionen der Nahrungsmittelmaschine (1) zumindest teilweise gesperrt oder freigeschaltet werden, insbesondere durch eine Steuereinrichtung (9).

3. Nahrungsmittelmaschine (1) nach mindestens einem der Ansprüche 1 oder 2, **dadurch gekennzeichnet, dass** die Sicherheitseinrichtung (7, 8) mindestens eine der folgenden Messeinrichtungen (7) umfasst:
- Messeinrichtung zum Erfassen der Auftrittsbelastung,
- optische Messeinrichtung.

4. Nahrungsmittelmaschine (1) nach mindestens Anspruch 3, **dadurch gekennzeichnet,**
**dass** die Messeinrichtung (7) zum Erfassen der Auftrittsbelastung entweder
eine Messeinrichtung (7) zum Erfassen einer auf den Auftritt wirkenden Kraft ist, oder
eine Messeinrichtung zum Erfassen einer durch die Auftrittsbelastung veränderten Position des Auftritts, wie insbesondere
- Winkelsensor zum Messen des Winkels (ϕ) zwischen dem Auftritt (4) und einer Bezugsebene, oder
- ein oder mehrere Positionssensoren- oder schalter.

5. Nahrungsmittelmaschine nach mindestens einem der Ansprüche 1-4, **dadurch gekennzeichnet, dass** die Sicherheitseinrichtung (7, 8) eine Auswerteeinheit (8) umfasst, die ein Messsignal (K1) von einer Messeinrichtung (7) empfängt und in Abhängigkeit des Signals (K1) ermittelt, ob eine Person auf dem Auftritt steht.

6. Nahrungsmittelmaschine nach Anspruch 5, **dadurch gekennzeichnet, dass** die Auswerteeinheit (8) eine Vergleichseinrichtung umfasst zum Vergleichen des Messsignals (K1) mit einem Vergleichswert.

7. Nahrungsmittelmaschine nach mindestens einem der Ansprüche 1 bis 6, **dadurch gekennzeichnet, dass** der Auftritt (4) von einer nicht ausladenden Ruheposition in eine ausladende Auftrittsposition mit einem entsprechenden Antrieb durch Betätigung eines Schalters bringbar ist, insbesondere durch einen Fußschalter (10).

8. Nahrungsmittelmaschine nach mindestens einem der Ansprüche 1 bis 7, **dadurch gekennzeichnet, dass** die Sicherheitseinrichtung (7, 8) derart ausgebildet ist, dass sie erfassen kann, ob der Auftritt (4) in einer nicht ausladenden Ruheposition angeordnet ist.

9. Nahrungsmittelmaschine nach mindestens einem der Ansprüche 1 bis 8, **dadurch gekennzeichnet, dass** der Auftritt (4) derart angeordnet ist, dass er in einer ausladenden Auftrittsposition bei Belastung seine Stellung ändert und bei Entlastung automatisch in den unbelasteten Zustand zurückkehrt, wobei eine Messeinrichtung (7) der Sicherheitseinrichtung (7, 8) die Stellung des Auftritts (4) detektiert.

10. Verfahren zum Betreiben einer Nahrungsmittelmaschine nach mindestens einem der Ansprüche 1 bis 9, **dadurch gekennzeichnet, dass**
eine Sicherheitseinrichtung (7, 8) erfasst, ob in einer ausladenden Auftrittsposition eines Auftritts (4) an der Nahrungsmittelmaschine (1) eine Person auf dem Auftritt (4) steht, wobei ermittelt wird, ob sich der Auftritt (4) in einer
- a) nicht ausladenden Ruheposition, oder
- b) in einer ausladenden Arbeitsposition ohne Belastung durch eine Person oder
- c) in einer ausladenden Arbeitsposition mit Belastung durch eine Person befindet und im Fall c) die Funktionen der Nahrungsmittelmaschine (1) zumindest teilweise gesperrt
werden und im Fall a) oder b) die Funktionen der Nahrungsmittelmaschine freigeschaltet werden.

11. Verfahren nach Anspruch 10, **dadurch gekennzeichnet, dass** die Funktionen der Nahrungsmittelmaschine (1) zumindest teilweise gesperrt werden, insbesondere zumindest aktive Bewegungen, wenn erfasst wird, dass eine Person auf dem Auftritt steht

12. Verfahren nach Anspruch 10 oder 11, **dadurch gekennzeichnet, dass** über eine Messeinrichtung ein Messsignal (K1) erzeugt wird und eine Auswerteeinheit (8) in Abhängigkeit des Messsignals ermittelt, ob eine Person auf dem Auftritt (4).

13. Verfahren nach Anspruch 12, **dadurch gekennzeichnet, dass** die Auswerteeinheit das Messsignal (K1) mit einem Vergleichswert vergleicht.

14. Nahrungsmittelmaschine nach mindestens einem der Ansprüche 1 bis 8, **dadurch gekennzeichnet, dass** die Sicherheitseinrichtung (7,8) über einen Positionsschalter die durch die Auftrittsbelastung einer Person veränderte Position erfasst, und durch den Positionsschalter der Ansteuerstrom oder Versorgungsstrom für mindestens eine Funktion der Nahrungsmittelmaschine unterbrochen wird.

## Claims

1. Food machine (1), in particular machine for processing and producing sausage, with a step (4), **characterized by**
a safety device (7, 8) for detecting whether a person is standing on the step (4) when the step (4) is in a projecting step-on position,wherein it can be determined whether the step (4) is in a
- a) not projecting rest position, or
- b) in a projecting working position without any load by a person, or
- c) in a projecting working position with a load by a person, and
in case c), the functions of the food machine (1) can be at least partially locked, and in case a) or b), the functions of the food machine can be unlocked.

2. Food machine (1) according to claim 1, **characterized in that** the food machine is designed such that, depending on a signal (K1) generated by the safety device (7, 8), the functions of the food machine (1) are at least partially locked or unlocked, in particular by a controlling system (9).

3. Food machine (1) at least according to one of claims 1 or 2, **characterized in that** the safety device (7, 8) comprises at least one of the following measuring apparatuses (7):
- measuring apparatus for detecting the step-on load,
- optical measuring apparatus.

4. Food machine (1) at least according to claim 3, **characterized in that** the measuring apparatus (7) comprises, for detecting the step-on load, either a measuring apparatus (7) for detecting a force acting on the step, or
a measuring apparatus for detecting a position of the step that has changed due to the step-on load, such as in particular
- an angle sensor for measuring the angle (ϕ) between the step (4) and a reference plane, or
- one or several position sensors or switches.

5. Food machine according to at least one of claims 1 - 4, **characterized in that** the safety device (7, 8) comprises an evaluation unit (8) which receives a measuring signal (K1) from a measuring apparatus (7) and detects, depending on the signal (K1), whether a person is standing on the step.

6. Food machine according to claim 5, **characterized in that** the evaluation unit (8) comprises a comparison apparatus for comparing the measuring signal (K1) with a comparative value.

7. Food machine according to at least one of claims 1 to 6, **characterized in that** the step (4) can be transferred from a not projecting rest position to a projecting step-on position with a corresponding drive by actuating a switch, in particular a foot actuated switch (10).

8. Food machine according to at least one of claims 1 to 7, **characterized in that** the safety device (7, 8) is designed such that it can detect whether the step (4) is arranged in a not projecting rest position.

9. Food machine according to at least one of claims 1 to 8, **characterized in that** the step (4) is arranged such that it changes its position in a projecting step-on position when it is loaded, and when it is relieved automatically returns to the unloaded state, wherein a measuring apparatus (7) of the safety device (7, 8) detects the position of the step (4).

10. Method of operating a food machine according to at least one of claims 1 to 9, **characterized in that** a safety device (7, 8) detects whether in a projecting step-on position of a step (4) at the food machine (1), a person is standing on the step (4),wherein it is determined whether the step (4) is in a
- a) not projecting rest position, or
- b) in a projecting working position without any load by a person, or
- c) in a projecting working position with a load by a person, and
in case c), the functions of the food machine (1) are at least partially locked, and in case a) or b), the functions of the food machine are unlocked.

11. Method according to claim 10, **characterized in that** the functions of the food machine (1) are at least partially locked, in particular at least active movements, when it is detected that a person is standing on the step.

12. Method according to claim 10 or 11, **characterized in that** a measuring signal (K1) is generated via a measuring apparatus, and an evaluation unit (8) detects, depending on the measuring signal, whether a person is standing on the step (4).

13. Method according to claim 12, **characterized in that** the evaluation unit compares the measuring signal (K1) with a comparative value.

14. Food machine according to at least one of claims 1 to 8, **characterized in that** the safety device (7, 8) detects, via a position switch, the position that has changed due to the step-on load of a person, and the drive current or supply current for at least one function of the food machine is interrupted via the position switch.

## Revendications

1. Machine (1) pour produits alimentaires, notamment machine pour traiter et fabriquer des saucisses, comprenant un marchepied (4), **caractérisée par**
un dispositif de sécurité (7, 8) pour détecter si une personne est en appui sur le marchepied (4), lorsque le marchepied (4) se trouve dans une position d'appui saillante, le dispositif permettant de détecter si le marchepied (4) se trouve dans
- a) une position de repos non saillante, ou
- b) une position de travail saillante, sans être chargé par une personne, ou
- c) une position de travail saillante, en étant chargé par une personne, et
dans le cas c), les fonctions de la machine (1) pour produits alimentaires sont au moins partiellement bloquées, et dans le cas a) ou le cas b), les fonctions de la machine pour produits alimentaires peuvent être débloquées.

2. Machine (1) pour produits alimentaires selon la revendication 1, **caractérisée en ce que** la machine pour produits alimentaires est configurée de façon telle, qu'en fonction d'un signal (K1) produit par le dispositif de sécurité (7, 8), les fonctions de la machine (1) pour produits alimentaires sont au moins partiellement bloquées ou débloquées, notamment par l'intermédiaire d'un dispositif de commande (9).

3. Machine (1) pour produits alimentaires selon l'une au moins des revendications 1 ou 2, **caractérisée en ce que** le dispositif de sécurité (7, 8) comporte au moins l'un des dispositifs de mesure (7) suivants :
- dispositif de mesure pour relever la charge sur le marchepied,
- dispositif de mesure optique.

4. Machine (1) pour produits alimentaires selon au moins la revendication 3, **caractérisée en ce que** le dispositif de mesure (7) pour relever la charge sur le marchepied est
soit un dispositif de mesure (7) pour relever une force agissant sur le marchepied,
soit un dispositif de mesure pour relever une position du marchepied modifiée par la charge sur le marchepied, comme notamment
- un capteur d'angle pour mesurer l'angle (ϕ) entre le marchepied (4) et un plan de référence, ou
- un ou plusieurs capteurs ou commutateurs de position.

5. Machine pour produits alimentaires selon l'une au moins des revendications 1 - 4, **caractérisée en ce que** le dispositif de sécurité (7, 8) comprend une unité de traitement de données (8), qui reçoit un signal de mesure (K1) d'un dispositif de mesure (7), et détermine, en fonction du signal (K1), si une personne se trouve en appui sur le marchepied.

6. Machine pour produits alimentaires selon la revendication 5, **caractérisée en ce que** l'unité de traitement de données (8) comprend un dispositif de comparaison destiné à comparer le signal de mesure (K1) à une valeur de comparaison.

7. Machine pour produits alimentaires selon l'une au moins des revendications 1 à 6, **caractérisée en ce que** le marchepied (4) peut être amené d'une position de repos non saillante dans une position d'appui saillante, à l'aide d'un entraînement correspondant, par actionnement d'un commutateur, notamment d'un commutateur à pied (10).

8. Machine pour produits alimentaires selon l'une au moins des revendications 1 à 7, **caractérisée en ce que** le dispositif de sécurité (7, 8) est configuré de manière à pouvoir relever si le marchepied (4) se trouve dans une position de repos non saillante.

9. Machine pour produits alimentaires selon l'une au moins des revendications 1 à 8, **caractérisée en ce que** le marchepied (4) est agencé de manière telle, que dans une position d'appui saillante, il modifie sa position lorsqu'il est chargé, et, lorsqu'il est déchargé, retourne automatiquement dans l'état non chargé, un dispositif de mesure (7) du dispositif de sécurité (7, 8) détectant la position du marchepied (4).

10. Procédé de fonctionnement d'une machine pour produits alimentaires selon l'une au moins des revendications 1 à 9, **caractérisé en ce qu'**un dispositif de sécurité (7, 8) détecte si, dans une position d'appui saillante d'un marchepied (4) sur la machine (1) pour produits alimentaires, une personne est en appui sur le marchepied (4), procédé d'après lequel on détermine si le marchepied (4) se trouve dans
- a) une position de repos non saillante, ou
- b) une position de travail saillante, sans être chargé par une personne, ou
- c) une position de travail saillante, en étant chargé par une personne, et
dans le cas c), les fonctions de la machine (1) pour produits alimentaires sont au moins partiellement bloquées, et dans le cas a) ou le cas b), les fonctions de la machine pour produits alimentaires sont débloquées.

11. Procédé selon la revendication 10, **caractérisé en ce que** les fonctions de la machine (1) pour produits alimentaires sont au moins partiellement bloquées, notamment au moins des mouvements actifs, lorsque l'on détecte qu'une personne se trouve en appui sur le marchepied.

12. Procédé selon la revendication 10 ou la revendication 11, **caractérisé en ce qu'**un signal de mesure (K1) est produit par l'intermédiaire d'un dispositif de mesure, et une unité de traitement de données (8) détermine, en fonction du signal de mesure, si une personne se trouve en appui sur le marchepied (4).

13. Procédé selon la revendication 12, **caractérisé en ce que** l'unité de traitement de données compare le signal de mesure (K1) avec une valeur de comparaison.

14. Machine pour produits alimentaires selon l'une au moins des revendications 1 à 8, **caractérisée en ce que** le dispositif de sécurité (7, 8) relève, par l'intermédiaire d'un commutateur de position, la position modifiée par la charge d'appui d'une personne, et le commutateur de position conduit à l'interruption du courant de commande ou du courant d'alimentation pour au moins une fonction de la machine pour produits alimentaires.
